# EUROPEAN PATENT APPLICATION

(11) **EP 0 601 264 A1**
(43) Date of publication of application: **15.06.1994**
(21) Application number: 92830666.1
(22) Date of filing: 10.12.1992
(51) Int. Cl.: F03B 13/20

(54) **Device for producing power on a body subject to movement of free oscillation**

(71) Applicant: Merighi, Cesare, I-25124 Brescia (IT)
(72) Inventor: Merighi, Cesare, I-25124 Brescia (IT)
(74) Representative: Manzoni, Alessandro

(57) **Abstract**

The invention relates to a device for producing electric power on board of a floating body which is subjected to swinging movement on the water. The device includes at least a means (10) moving in response to swinging movements to charge progressively with its movement energy a mechanic energy accumulator (13), the exit of which is perodically released and connected to an alternator or generator of electric power (16) designed to feed rechargeable batteries (17) and/or electric sets.

## Description

The present invention concerns a device for producing electric power from the movement energy of a body subject to oscillations, and applicable in particular to boats, signal buoys, floats and the like normally oscillating on water because of wave and/or wind movement.

Instruments and electric devices, light sources for signal and so on, on board of boats or on signal appliance in water basins, are all installations requiring an unbroken availability of electric power. At present their provisionment is provided by recurring to electric batteries, generators or photovoltaic panels. Nevertheless, electric batteries on their own have a reduced range; generators, besides encumbering and noisy, imply availability and fuel consume problems and are not suitable for little boats; of photovoltaic panels , in turn, are also encumbering and generally appliable to immovable and sunny installations.

The present invention on the contrary aims to find a new and original solution to the problem of electric power availability on board of a floating body by turning movement energy which is typical of a body oscillatingly applied on water surface. In fact, both little boats, also when steady and anchored, and signal buoys located on water, and floating installations, are normally subject to swinging movements which will vary in emphasis, though they remain continual, because of wave and/or wind movement, swinging that represents a potential energy source by movement.

The invention is then based on the exploitation of such all energy directly on board of a boat or floating body, what is more said energy being without any cost, and available anywhere and under any weather condition, and which in the case of boats can be used whether said boats are anchored or sailing. The present invention then offeers a device conceived to turn the swinging movement of a body on water into electric power to be used by installations, instruments and electrical sets on board of the body itself granting in this way its autonomy without resorting to generator devices which absorb energy from fuel.

An embodiment of this invention will be described further on with more details referring to the included drawing showing schematically the proposed device.

This device includes an eccentric member or rocker arm 10 fixed to a shaft 11 revovingly mounted on bearings. The member or rocker arm 10 is susceptible of angular movements in response to the swinging of a body floating on water and which causes the rotation of the tree 11.

The shaft 11 controls a wheelwork 12 wich in, turn operates, at the entry, an accumulator of mechanic power 13 the exit of which is left locked. The shaft 11 will be coupled to the wheelwork 12 by an intermediate, undirrrrectional entrainer13a, for instance of the free-wheeled type, so that to the angular shiftings of the member or rocker arm 10 corresponds the application of a revolving strength of the wheelwork, always in the same direction. The wheelwork 12 is designed to work as a demultiplier so as to be able to operate the mechanic power accumulator 13 when the momentum is applied to the shaft of the member or rocker arm 10 and also when the accumulator is progressively charging. Said mechanic power accumulator 13 can be of a spring kind or any other type. It will be in all cases provided with a control unit 14 which is able to check the maximum accumulation of energy by the accumulator, to release said accumulator from the driving wheelwork if necessary, and first of all to unlock the exit of the accumulator for releasing the energy accumulated. Said control unit can be composed a of mechanic, electric or electronic strength gauge which is associated to the exit of the accumulator or to means connected thereto.

The exit of the mechanic energy accumulator 13 can be cogwheel in the form of a gearing or a revolving shaft 15 designed to operate an alternator or generator 16 through a speed multiplier wheelwork as shown at 17, the altternator or generator 16 feeding rechargeable batteries 18 and/or directly the electric sets connected by suitable control devices.

The described installation, at least for what is of the mechanic parts, can be easily included in a body 19 and set , conveniently and in conditions of small encumbering, on any floating body such as boats, signal buoy or anything else. Then, any oscillation movement on the water of the floating body causes swinging movements of the member or rocker arm 10 which operate the mechanic power accumulator 13 through the kinematic chain 11,12,13a.

When it is charge, said accumulator is unblocked to release the mechanic energy accumulated and actuate an electric generator. Thus, a production of electric power correponds to the potential energy of an even very weak swinging movement; said electric power can be accumulated in batteries so as to be used further on for feeding all and any set or instruments on board of the floating body.

Even when anchored, but swinging, the movement energy of the floating body can be turned into electric power immediately available on board of the body itself.

Thus, for what concerns boats, even when they are in the harbor or anyway anchored for long periods there is a constant production of electric power which keeps the batteries charged and allows to feed the electric instruments also when the boat is not being used and in all cases as soon as the boat is used.

Finally, it is important to note that electric power released by the mechanic energy accumulator when charged, by the member or rocker arm in response to the swinging of the floating body could be also used for operating mechanial-pneumatic sets such as the compressor of a refrigerating circuit of a refrigerator which can be set on board of a boat so as to make the refrigerator work without electric power.

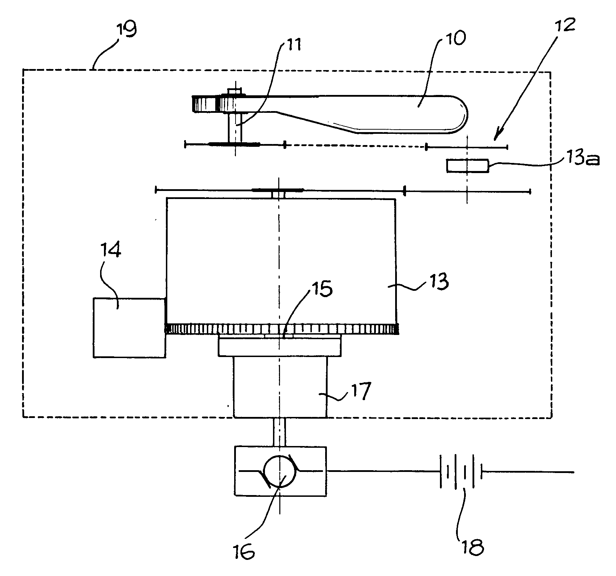

## Claims

1. Device for producing electric power on board of a floating body such as boats, signal buoys or the like from the movement energy due to the oscillations, namely the swinging movement, of the body on the water surface, **characterized** in that it includes at least a means (10) moving in response to the swinging of said floating body to charge progressively with its movement energy a mechanic energy accumulator (13), and in that the exit of said mechanic energy accumulator is periodically released and is connected to an alternator or generator of electric power (16) designed to feed rechargeable batteries (17) and/or electric sets.

2. Device as claimed in claim 1., wherein said means (10) moving in response to the swinging of the floating body is an eccentric member or rocker arm (10) fixed to a shaft (11).

3. Device as claimed in claims 1. and 2., wherein said eccentric member or rocker arm (10) operates, through said shaft (11), a demultiplier wheelwork (12) which actuates an accumulator of mechanic energy (13), the charge of said accumulator being controlled by a control device (14), and in which the exit of said mechanic energy accumulator operates the alternator or electric power generator (16) by means of a wheelwork multiplying the rotation speed (17).

4. Device as claimed in the prior claims, including also means for a unidirectional rotation of the demultiplier wheelwork driven by the alternative movements of the eccentric member or rocker arm which moves in response to the swinging movements of the floating body and means to control the battery charge.

5. Device for producing mechanic energy on board of a floating body such as a boat from the movement energy due to the oscillation movements, that is the swinging of the body on the water surface, **characterized** in that it includes at least a means (10) that moves in response to the swinging of said body to charge progressively, by a demultiplier wheelwork, a mechanic energy accumulator, and in that the exit of said mechanic energy accumulator is periodically released and connected with a unit to be operated, such as the compressor group of a refrigerator set.
